# EUROPÄISCHE PATENTANMELDUNG

(11) **EP 1 995 048 A1**
(43) Veröffentlichungstag der Anmeldung: **26.11.2008**
(21) Anmeldenummer: 08152890.3
(22) Anmeldetag: 18.03.2008
(51) Int. Cl.: B29D 30/16, B29D 30/30, B29D 30/48, B60C 11/14

(54) **Verfahren zur Herstellung eines Fahrzeugluftreifens und Fahrzeugluftreifen**

(30) Priorität: 22.05.2007 DE 102007023725
(71) Anmelder: Continental Aktiengesellschaft, 30165 Hannover (DE)
(72) Erfinder: Frerichs, Udo, 30855 Langenhagen (DE)
(74) Vertreter: Finger, Karsten

(57) **Zusammenfassung**

Die Erfindung betrifft ein Verfahren zur Herstellung eines Fahrzeugluftreifens mit einem Laufstreifen (4) aus einer Laufstreifencap (5) und einer Laufstreifenbase (6), einer Karkasseinlage (2), einem Gürtelverband (3) und Wulstkemen (8) mit Apexprofilen (9), wobei die Laufstreifencap (5) und/oder die Apexprofile (9) auf Aufbautrommeln (12, 16) durch Spulen eines oder mehrerer Kautschukmischungsstreifen (10, 11) aufgebaut wird bzw. werden.

Auf zumindest eine der breiten Seiten des Mischungsstreifens (10, 11 werden, vor oder während des Spulens, Kurzfasern (14) angeheftet.

## Beschreibung

Die Erfindung betrifft ein Verfahren zur Herstellung eines Fahrzeugluftreifens mit einem Laufstreifen aus einer Laufstreifencap und einer Laufstreifenbase, einer Karkasseinlage, einem Gürtelverband und Wulstkernen mit Apexprofilen, wobei die Laufstreifencap und/oder die Apexprofile auf Aufbautrommeln durch Spulen eines oder mehrerer Kautschukmischungsstreifen aufgebaut wird bzw. werden.

Es ist bekannt, die Laufstreifencap eines Laufstreifens eines Fahrzeugluftreifens durch überlappendes spiraliges Wickeln (Spulen) eines Kautschukmischungsstreifens herzustellen. Aus der US 5,114,512 ist es bekannt, Apexprofile durch spiraliges Wickeln eines Mischungsstreifens aus einer Kautschukmischung aufzubauen. Des Weiteren offenbart die EP-B-1 072 446 einen Reifen mit einem Laufstreifen mit in radialer Richtung orientierten Stapelfasern, welche aus einem nicht-metallischen anorganischen Material bestehen, wobei aus der mit den Stapelfasern vermischten Kautschukmischung durch Kalandrieren eine Mischungsbahn mit in Längsrichtung orientierten Fasern erstellt wird. Diese Mischungsbahn wird anschließend mehrfach gefaltet, sodass aus der gefalteten Bahn ein Laufstreifen erstellt werden kann, in welchem ein Großteil der Fasern in radialer Richtung orientiert ist. Laufstreifen mit in radialer Richtung orientierten Fasern weisen eine erhöhte Haftreibung zum Untergrund auf, insbesondere können derartige Laufstreifen einen wesentlich verbesserten Griff auf schneeigem oder eisigem Untergrund sicherstellen.

Kautschukmischungsstreifen, die zum Herstellen von Reifenbauteilen durch Spulen vorgesehen sind, werden insbesondere durch Extrusion hergestellt. Dabei ist es grundsätzlich möglich, während der Herstellung der Kautschukmischung Kurzfasern in den Extruder einzubringen, sodass der extrudierte Mischungsstreifen bereits Kurzfasern enthält, die im Wesentlichen in Längsrichtung des Mischungsstreifens orientiert sind. Bei einem gewissen Faseranteil wird die Mischung jedoch derart steif bzw. zäh, dass ein Herstellen der Mischung nur noch mit hoher Extruderleistung oder nicht mehr möglich ist.

Der Erfindung liegt die Aufgabe zu Grunde, bei einem Verfahren der eingangs genannten Art in Reifenbauteilen aus Mischungsstreifen auf einfache Weise Kurzfasern einbringen zu können, die eine beliebige Orientierung aufweisen oder auch unorientiert sein können.

Gelöst wird die gestellte Aufgabe erfindungsgemäß dadurch, dass auf zumindest eine der breiten Seiten des Mischungsstreifens, vor oder während des Spulens, Kurzfasern angeheftet werden. Gemäß einer bevorzugten Ausführungsform der Erfindung können die Kurzfasern eine Vorzugsorientierung aufweisen.

Die Erfindung gestattet es daher, einen Mischungsstreifen durch Extrusion herzustellen, ohne die Kurzfasern bereits im Extruder einmischen zu müssen. Je nach der Orientierung der angehefteten Kurzfasern ergibt sich im fertigen Reifen deren Orientierung und damit deren Wirkung auf die Eigenschaften des betreffenden Reifenbauteils.

Bei einer bevorzugten Ausführungsform der Erfindung werden die Kurzfasern mit einer Vorzugsorientierung angeheftet. Im fertigen Reifen weisen dann die Kurzfasern beispielsweise eine Orientierung im Wesentlichen in radialer Richtung oder in Umfangsrichtung auf. Je nach der Vorzugsorientierung der Kurzfasern lassen sich bestimmte Reifeneigenschaften besonders vorteilhaft beeinflussen. Bei einer Orientierung in im Wesentlichen radialer Richtung lassen sich vor Allem die Hafteigenschaften des Laufstreifens auf schneeigem oder eisigem Untergrund verbessern.

Es gibt eine Vielzahl von Möglichkeiten, die Kurzfasern auf den Mischungsstreifen aufzubringen. Von besonderem Vorteil sind jene Möglichkeiten, die eine automatische Aufbringung gestatten. Dies ist beispielsweise dann möglich, wenn die Kurzfasern aus einer Spenderkassette, einem Magazin, einem Faserbehälter oder dergleichen appliziert werden. Dabei können die Kurzfasern bereits in der gewünschten Orientierung aus der Spenderkassette, dem Magazin und dergleichen austreten.

Die Erfindung ist auch von besonderem Vorteil für Laufstreifen, deren Laufstreifencap als Füllstoff Kieselsäure enthält, sodass die Laufstreifencap keine oder keine nennenswerte elektrische Leitfähigkeit aufweist. In diesem Fall kann auf den Mischungsstreifen abschnitts- oder stellenweise eine elektrisch leitfähige Kautschukmischung in Form von Streifen, Kurzstegen oder dergleichen appliziert werden, sodass im fertigen Reifen zwischen der Laufstreifenbase und der Außenseite der Laufstreifencap Passagen aus elektrisch leitfähiger Mischung gebildet sind, um unerwünschte elektrostatische Aufladungen des Reifens zu vermeiden.

Für die Erfindung sind vor Allem solche Fasern geeignet, die eine Länge von 0,1 mm bis 5 mm und einen Durchmesser von 1 µm bis 100 µm aufweisen und entweder Einzelfasern oder Stapelfasern sind. Die Kurzfasern können aus organischen und/oder anorganischen Materialien bestehen, in Apexprofilen können sie auch aus Metall bestehen.

Die Erfindung betrifft ferner einen Fahrzeugluftreifen, welcher nach dem erfindungsgemäßen Verfahren hergestellt ist.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 einen Querschnitt durch die eine Hälfte eines Rohreifens,
Fig. 2 ein Stadium bei der Herstellung eines Laufstreifens gemäß Fig. 1,
Fig. 3 eine weitere Ausführungsvariante anhand eines Stadiums bei der Herstellung eines Apexprofils eines Fahrzeugluftreifens.

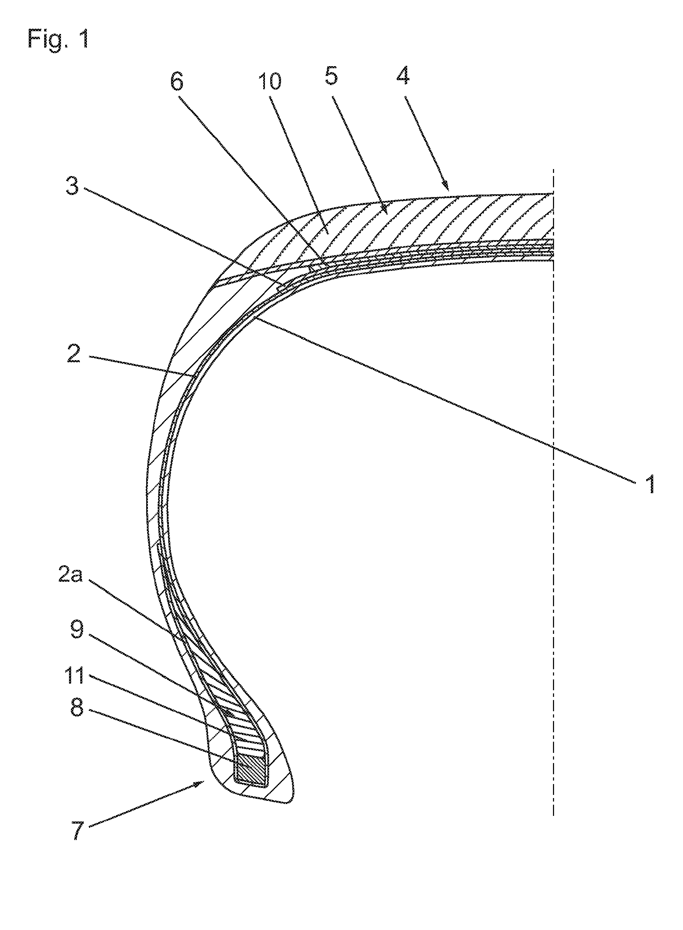

Fig. 1 zeigt schematisch einen Querschnitt durch die eine Hälfte eines noch unvulkanisierten Fahrzeugluftreifens in Radialbauart für PKW. Der Reifen weist eine Innenschicht 1, eine Radialkarkasse 2, einen Gürtelverband 3, welcher bei der dargestellten Ausführungsform aus zwei Gürtellagen besteht, und einen Laufstreifen 4 auf, welcher aus einer unmittelbar auf den Gürtelverband 3 befindlichen Laufstreifenbase 6 und einer Laufstreifencap 5 besteht, welche aus unterschiedlichen Kautschukmischungen hergestellt sind. In die Laufstreifencap 5 wird bei der Vulkanisation des Rohreifens in einer Vulkanisationsform eine Profilierung aus Nuten, Rillen, Einschnitten und dergleichen eingeprägt.

Die insbesondere einlagig ausgeführte Radialkarkasse 2 umläuft in Wulstbereichen 7 mit Wulstkernen 8 und auf diesen befindlichen Apexprofilen 9 den Kern 8 und die Profile 9 und bildet außenseitig derselben Hochschläge 2a.

Bei dem gezeigten Ausführungsbeispiel ist die Laufstreifencap 5 aus zumindest einem Mischungsstreifen 10, die Apexprofile 9 sind aus Mischungsstreifen 11, wie im Folgenden näher erläutert wird, aufgebaut. Die Laufstreifenbase 6 kann ebenfalls aus einem Kautschukmischungsstreifen oder als Monoteil erstellt sein. Die Kautschukmischungsstreifen 10, 11 sind insbesondere durch Extrusion hergestellt und weisen beispielsweise eine Breite von 10 mm bis 20 mm und eine Dicke von insbesondere bis zu 2 mm auf und werden durch spiraliges Wickeln (Spulen) aufgebracht.

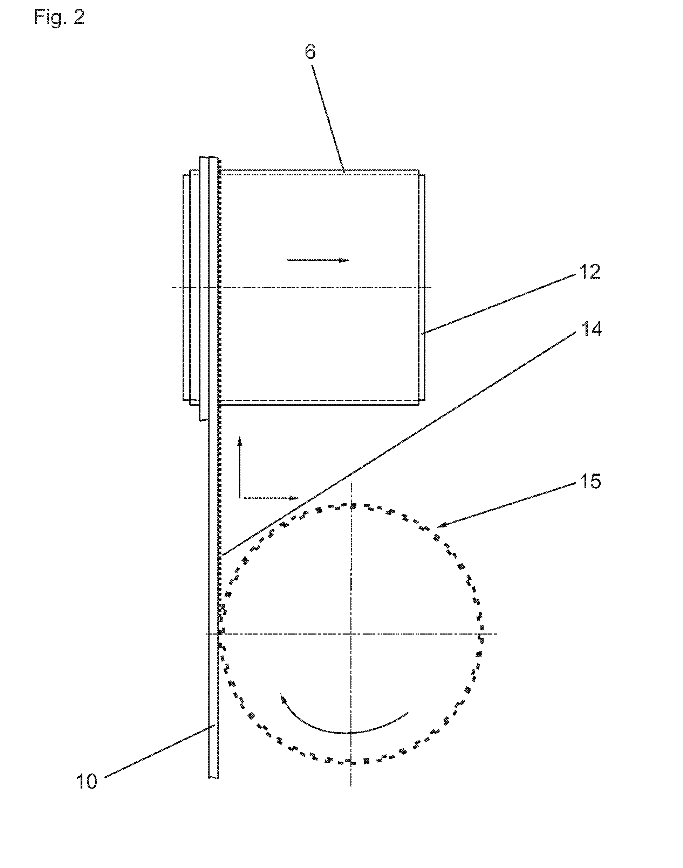

Wie Fig. 2 zeigt erfolgt das Spulen des Mischungsstreifens 10, welcher die Laufstreifencap 5 bildet, auf einer in Rotation versetzten Hilfstrommel 12, welche in bekannter nicht gezeigter Weise segmentiert ausgeführt ist. Die Segmente der Hilfstrommel 12 sind aus- und einfahrbar, sodass der Außendurchmesser der Hilfstrommel 12 vergrößert und verkleinert werden kann. Auf die expandierte Hilfstrommel 12 wird vorerst die Laufstreifenbase 6 aufgebracht. Vor dem Erreichen der Hilfstrommel 12 werden auf zumindest eine der breiten Seitenflächen des Mischungsstreifens 10 Kurzfasern 14 quer zur Längserstreckung des Mischungsstreifen 10 und demnach ausgerichtet bzw. weitgehend ausgerichtet aufgebracht. Die Kurzfasern 14 werden von einer in Fig. 2 angedeuteten Spenderkassette 15 abgegeben, welche die Kurzfasern 14 ausgerichtet am Mischungsstreifen 10 anheftet. Die Eigenklebrigkeit des Mischungsstreifens 10 unterstützt die Haftung der Kurzfasern 14. Zusätzlich kann der Mischungsstreifen 10 vor dem Aufbringen der Kurzfasern 14 mit einer die Haftung erhöhenden Substanz bestrichen werden. Der kontinuierlich der Hilfstrommel 12 zugeführte und auf einer seiner breiten Seiten mit ausgerichteten Kurzfasern 14 versehene Mischungsstreifen 10 wird auf der Hilfstrommel 12 spiralig und unter gegenseitiger Überlappung der Windungen auf die bereits aufgebrachte Laufstreifenbase 6 gespult. Im fertigen Laufstreifen 4 befinden sich in der Laufstreifencap 5 im Wesentlichen in radialer Richtung ausgerichtete Kurzfasern 14.

Analog zur beschriebenen Weise ist es möglich, in Längsrichtung des Mischungsstreifens 10 orientierte Kurzfasern aufzubringen oder Kurzfasern, die eine andere oder keine bevorzugte Orientierung aufweisen.

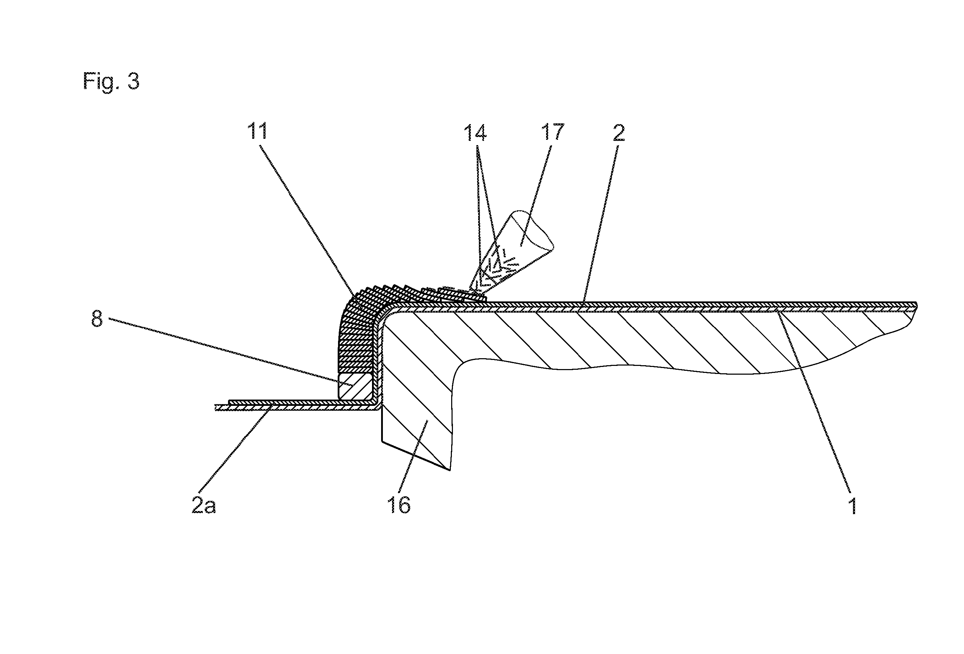

Bei der in Fig. 3 gezeigten Ausführungsvariante werden die Apexprofile 9 durch Spulen von Mischungsstreifen 11 aufgebaut. Dazu wird auf einer zylindrischen, ebenfalls mit ein- und ausfahrbaren Segmenten versehenen Aufbautrommel 16 vorerst jene Kautschukmischungsplatte aufgelegt, welche die spätere Innenschicht 1 des Reifens bildet. Anschließend wird die Karkasslage 2 um die Reifenaufbautrommel 16 gelegt und es werden die Wulstkerne 8 gesetzt. Nun werden die Apexprofile 9 durch Spulen von Mischungsstreifen 11 gebildet. Dabei wird der Mischungsstreifen 11, beginnend beim jeweiligen Wulstkern 8, in mehreren Windungen aufeinander mit sich ändernder Überlappung gewickelt, wie es in Fig. 3 gezeigt ist. Während des Spulens des Mischungsstreifens 11 werden auf die äußere breite Seite des Mischungsstreifens 11 Kurzfasern 14 aufgebracht, und zwar bevor der Mischungsstreifen 11 in seiner nächsten Windung auf sich selbst aufgelegt wird. Die Kurzfasern 14 können über einen in Fig. 4 angedeuteten Faserbehälter 17 dosiert aufgebracht werden. Die aus dem Faserbehälter 17 entlassenen Kurzfasern 14 können in einer bestimmten Orientierung, beispielsweise quer zur Längserstreckung oder in Längserstreckung des Mischungsstreifens 11, aufgelegt bzw. aufgebracht werden. Möglich ist es auch, die Kurzfasern 14 ungeordnet aufzubringen. Auf die fertig gespulten Apex-Profile 9 werden seitlich die Endabschnitte der Karkasslage 2 umgeschlagen und der Reifen wird auf übliche Weise fertig gestellt.

Der Mischungsstreifen 10 kann auch aus einer Kautschukmischung gefertigt werden, die elektrisch nicht leitfähig ist, indem sie beispielsweise als Füllstoff Kieselsäure und keinen bzw. keinen nennenswerten Anteil an Ruß enthält. Um im fertigen Reifen elektrisch leitfähige Passagen zwischen der Laufstreifenbase und der Außenseite des Laufstreifens zur Verfügung zu stellen, können auf den Mischungsstreifen abschnitts- oder stellenweise Streifen, Kurzstege oder dergleichen aus einer elektrisch leitfähigen Kautschukmischung appliziert werden.

Bei sämtlichen Ausführungsformen bzw. im Rahmen der Erfindung können die Kurzfasern 14 in Faserbündeln oder als Einzelfasern verwendet werden. Ihr Durchmesser beträgt zwischen 1 µm bis 100 µm, ihre durchschnittliche Länge zwischen 0,1 mm und 5 mm. Als Material für die Kurzfasern 14 kommen vor Allem organische und /oder anorganische Materialien in Frage, beispielsweise Aramide, Polyester, Rayon, sowie Hybridmaterialien aus diesen Materialien, ferner Kohlefasern oder Glasfasern. In Apexprofilen können auch metallische Kurzfasern 14 verwendet werden.

Die Fasern können auf vielfältige Weise auf die Mischungsstreifen appliziert werden. Möglich ist beispielsweise ein Aufblasen der Fasern. Die Fasern können ferner unmittelbar vor dem Anheften von einem Faserstrang abgeschnitten werden. Die Fasern können auch bereits auf einer dünnen Folie positioniert sein, sodass die Folie auf den Mischungsstreifen doubliert wird.

### Bezugszeichenliste

- 1: Innenschicht
- 2: Karkasse
- 2a: Hochschlag
- 3: Gürtelverband
- 4: Laufstreifen
- 5: Cap
- 6: Base
- 7: Wulstbereiche
- 8: Kern
- 9: Apex
- 10: Mischungsstreifen
- 11: Mischungsstreifen
- 12: Hilfstrommel
- 14: Kurzfasern
- 15: Spenderkassette
- 16: Aufbautrommel
- 17: Faserbehälter

## Patentansprüche

1. Verfahren zur Herstellung eines Fahrzeugluftreifens mit einem Laufstreifen (4) aus einer Laufstreifencap (5) und einer Laufstreifenbase (6), einer Karkasseinlage (2), einem Gürtelverband (3) und Wulstkernen (8) mit Apexprofilen (9), wobei die Laufstreifencap (5) und/oder die Apexprofile (9) auf Aufbautrommeln (12, 16) durch Spulen eines oder mehrerer Kautschukmischungsstreifen (10, 11) aufgebaut wird bzw. werden,
**dadurch gekennzeichnet,**
**dass** auf zumindest eine der breiten Seiten des Mischungsstreifens (10, 11), vor oder während des Spulens, Kurzfasern (14) angeheftet werden.

2. Verfahren nach Anspruch 1, **dadurch gekennzeichnet, dass** die Kurzfasern (14) mit einer Vorzugsorientierung angeheftet werden.

3. Verfahren nach Anspruch 1 oder 2, **dadurch gekennzeichnet, dass** die Kurzfasern (14) aus einer Spenderkassette (15), einem Magazin, einem Faserbehälter (17) oder dergleichen auf dem Mischungsstreifen (10, 11) appliziert werden.

4. Verfahren nach einem der Ansprüche 1 bis 3, **dadurch gekennzeichnet, dass** der zur Herstellung der Laufstreifencap (5) vorgesehene Mischungsstreifen (10) aus einer elektrisch nicht leitfähigen Kautschukmischung hergestellt wird und auf eine der breiten Seiten des Mischungsstreifens (10) abschnitts- oder stellenweise eine elektrisch leitfähige Kautschukmischung als Streifen, Kurzstege oder dergleichen appliziert wird.

5. Verfahren nach einem der Ansprüche 1 bis 4, **dadurch gekennzeichnet, dass** die Kurzfasern (14) eine Länge von 0,1 mm bis 5 mm und einen Durchmesser von 1 µm bis 100 µm aufweisen.

6. Verfahren nach einem der Ansprüche 1 bis 5, **dadurch gekennzeichnet, dass** die Kurzfasern (14) Stapelfasern oder Einzelfasern sind.

7. Verfahren nach einem der Ansprüche 1 bis 6, **dadurch gekennzeichnet, dass** die Kurzfasern (14) aus organischen und/oder anorganischen Materialien bestehen.

8. Verfahren nach einem der Ansprüche 1 bis 6, **dadurch gekennzeichnet, dass** die Kurzfasern (14) aus Metall bestehen.

9. Fahrzeugluftreifen, welcher gemäß zumindest einem der Ansprüche 1 bis 8 hergestellt ist.
